# EUROPEAN PATENT APPLICATION

(11) **EP 0 733 985 A2**
(43) Date of publication of application: **25.09.1996**
(21) Application number: 96104228.0
(22) Date of filing: 15.03.1996
(51) Int. Cl.: G06F 17/60

(54) **Monitoring system**

(30) Priority: 18.03.1995 GB 9505526; 09.06.1995 GB 9511747
(71) Applicant: Henlid Limited, Birmingham B7 4DS (GB)
(72) Inventor: Henry, Dean Charles, Birmingham B47 5RB, West Midlands (GB)
(74) Representative: Lucking, David John

(57) **Abstract**

A monitoring system (11) is described, for a storage system comprising a plurality of storage means (10) containing stock. The monitoring system (11) comprises sensing means (12) associated with the storage means (10) to monitor the contents of the storage means (10) and periodically to generate a signal indicative of the contents of the storage means (10). Also processing means (13) adapted to receive the signals indicative of the contents of the storage means (10) and to compare the measured contents of each storage means (10) with a respective predetermined level of contents and, if the measured contents has fallen below the predetermined level of contents, to generate a signal to instigate an order to replenish the stock in the respective storage means (10). The processing means (13) is adapted to monitor the rate of useage of stock items and to adjust the predetermined level of contents accordingly.

## Description

### Description of Invention

The invention relates to a monitoring system for a stock storage system comprising a plurality of storage means containing stock.

It is an object of the invention to provide an improved form of monitoring system for a storage system comprising a plurality of storage means containing stock.

According to a first aspect of the invention there is provided a monitoring system, for a storage system comprising a plurality of storage means containing stock, the monitoring system comprising sensing means associated with the storage means to monitor the contents of the storage means and periodically to generate a signal indicative of the contents of the storage means, processing means adapted to receive the signals indicative of the contents of the storage means and to compare the measured contents of each storage means with a respective predetermined level of contents and, if the measured contents has fallen below the predetermined level of contents, to generate a signal to instigate an order to replenish the stock in the respective storage means, characterised in that the processing means is adapted to monitor the rate of useage of stock items and to adjust the predetermined level of contents accordingly.

The invention provides the advantage that the monitoring of the storage system is completely automatic and does not rely on any manual input.

The storage means may be bins containing stock in the form of distinct articles and the sensing means may comprise load balances on which the bins are located. In such an embodiment the signals generated by the sensing means may represent the total weight of the bin and contents, and the processing means may have stored therein the weight of the bin and the weight of each distinct article enabling it to calculate the number of articles remaining in the bin at any one time.

Preferably the sensing means comprises at least one load balance. If the storage means comprises a racking system containing a plurality of bins, there may be a load balance associated with each bin. If the storage means comprises a carousel unit containing a plurality of bins, with an access point through which bins may be accessed for the removal of stock, there may be one or more load balancers provided adjacent the access point. If the storage system comprises a racking system containing a plurality of bins, which are removed from the racking system by a vehicle for access thereto for the removal of stock, the at least one load balance may be provided on a load bearing portion of the vehicle concerned.

Preferably the signal to instigate the order is passed automatically to a respective supplier by communication means, for example by modem and telephone lines, where an advice note is automatically printed, or an associated monitoring system receives the order.

In a preferred embodiment the processing means is adapted in response to the input of list of items required, to calculate the most efficient order in which to obtain the items from the storage means. Preferably it further comprises indicator means adapted to activate in response to signals generated by the processing means to indicate to an operator the location of the next storage means to remove stock items from stock, the indicator means may further indicate to the operator when the required number of items has been removed from the associated storage means.

The monitoring system may further comprise a hand held unit carried by the operator comprising means to input to the hand held unit the identity of the storage means, the hand held unit being adapted to communicate with the processing means to obtain details of the number of items to be removed from the storage means.

According to a second aspect of the invention there is provided a method of monitoring a storage system comprising a plurality of storage bins containing stock, the method comprising the steps of :
(a) at all times when access to a storage means to remove stock is possible, continuously monitoring the contents of each storage means;
(b) generating signals indicative of the contents of the storage means;
(c) comparing the contents of the storage means with a predetermined level of contents; and
(d) if the contents of the storage means is below the respective predetermined level of contents, generating an order for stock to replenish the respective storage means,
characterised in that it further comprises the step of monitoring the rate of useage of stock items and adjusting the predetermined level of contents accordingly.

Embodiments of the invention will now be described, by way of example only, with reference to the accompanying drawings in which:
FIGURE 1 is a schematic illustration of an embodiment of a monitoring system according to the invention applied to a static bin storage system;
FIGURE 2 is a schematic illustration of an alternative embodiment of a monitoring system according to the invention applied to a carousel storage system;
FIGURE 3 is a schematic illustration of a further alternative embodiment of a monitoring system according to the invention applied to a removable bin stroage system; and,
FIGURE 4 is an illustration of an alternative form of bin for use in "first-in-first-out" applications of embodiments of monitoring systems according to the invention.

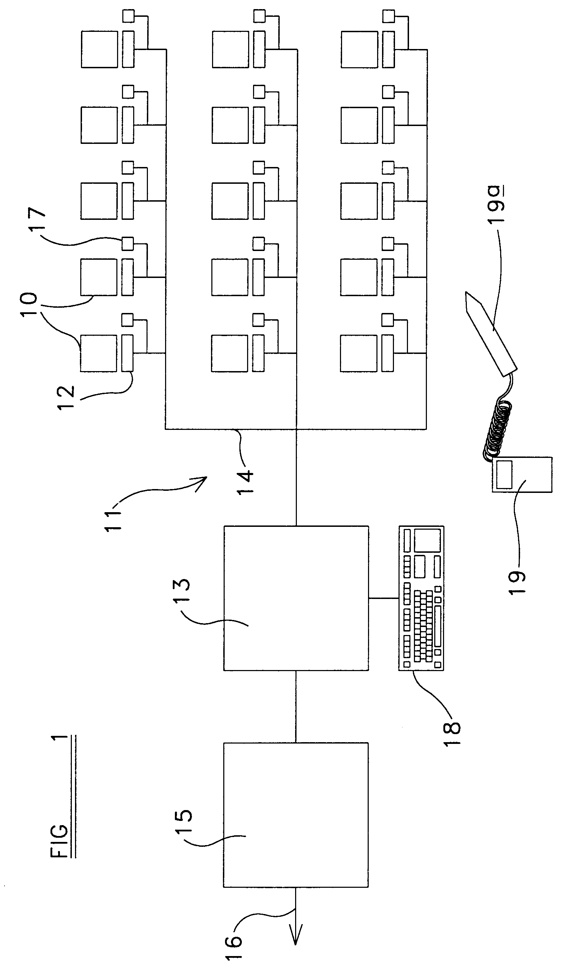

Referring to Figure 1, a storage system comprises a plurality of storage means in the form of bins 10, each containing stock, in this case in the form of distinct articles. Stock may be, for example, automotive components, electrical components or fasteners. In general every item contained in each particular bin 10 will be identical.

A monitoring system 11 suitable for use with a storage system in which access to each bin 10, for the removal of stock, is constantly available, comprises a sensing means in the form of a load balance 12 associated with each bin 10. The load balances 12 are each connected with a central processing unit (CPU) 13 via lines 14. The CPU 13 is connected to a modem 15 which is in turn connected to a telephone line 16.

Each bin and load balance combination 10/12 is identified by a bar code. The bar code may be read with a bar code reader when manual checking of the bins 10 is carried out. In addition each signal sent from a load balance 12 to the CPU 13 will commence with the identifer code in order that the CPU can identify which load balance 12 the signal is sent by.

The system 11 operates as follows. Each load balance 12 continuously monitors the weight of the respective bin 10 which is located upon it. When a number of articles of stock are removed from a respective bin 10 the weight sensed by the respective load balance 12 alters and a signal indicative of the new weight of the bin 10 and contents is sent from the load balance 12 to the CPU 13. The CPU 13 calculates the number of articles in the respective bin 10 by deduction from the total weight of the weight of the bin and division by the weight of a single article. The resultant number of articles present in the bin 10 is then compared with predetermined levels of contents stored within the CPU 13. When the contents of the bin 10 has fallen below a predetermined re-order level of contents, a signal is generated by the CPU 13 which is sent via the modem 15 and telephone line 16 to the appropriate supplier. The signal thus sent automatically instigates an order to replenish the contents of the respective bin 10. If the contents subsequently falls below a predetermined minimum level of contents, before the stock is replenished, a reminder will be issued and sent to the supplier as before. If, however, the stock in any bin 10 exceeds a predetermined minimum level of stock, a return note may issue and the excess be returned to the supplier or a bar put on the issuance of further orders.

As an alternative to the mode of operation described above, the monitoring system 11 may be configured such that each load balance 12 sends a signal to the CPU 13 at constant time intervals rather than only when a change is detected in the measured weight. If the number of bins 10 in the storage system is very large it may be necessary to operate the monitoring system 11 in this manner in order that the CPU 13 can process the signals without locking up.

In place of the lines 14, signals may be sent from the load balances 12 to the CPU 13 as radio frequency transmissions, or by any other appropriate means. In such an embodiment each balance 12 comprises a transmitter and the CPU 13 has an associated receiver, the lines 14 being omitted. In order to identify the signals unambigously each transmitter may operate at a different frequency. Such an embodiment could be particularly appropriate for use with a flow-line system. That is where the bins 10 and associated balances 12 are mounted on trolleys, rather than in fixed locations, adjacent for example a production line.

The monitoring system 11 may further comprise indicator means 17 associated with each storage bin 10. These may be, for example, in the form of lights, or buzzers or the like which generate audible signals.

A monitoring system 11 incorporating such indicator means 17 may operate as follows. A list of the stock to be removed from the storage system is entered into the CPU 13. The CPU 13 calculates the most efficient order in which to remove the items on the basis of the relative locations of the relevant bins 10. It then activates the indicator means 17 associated with first bin 10 to assist the operator in locating it. If the indicator means 17 comprises a light, it may simply be illuminated or it may flash. If the indicator means comprises a buzzer, it may buzz constantly or intermittently.

Once the operator arrives at the relevant bin 10 and removes the required items, the sensing means 12 monitors the contents of the bin 10 as previously described. However when the appropriate number of items has been removed, the sensing means 12 generates a signal to alter the manner of activation of the indicator means 17 or to deactivate it, the signal either going directly to the indicator means 17 or via the CPU 13. For example, a light which was initially flashing, may cease flashing to indicate that the appropriate number of items have been removed from the bin 10, remain lit for a brief period and then go out. Similar changes may occur if the indicator means 17 comprises a buzzer. The indicator means 17 associated with the next bin 10 is then activated by the CPU 13 and the process repeated until all the relevant bins 10 have been visited and the items removed.

The list of stock to be removed from the storage system, may be manually input to the CPU 13 by means of an associated keyboard 18. Alternatively, where the monitoring system 11 is in use at a suppliers premises, an advice note or stock order issued automatically by an associated monitoring system 11 at a customers premises may form the list of items to be removed.

When the operator is collecting the required items from the storage bins 10 he may take with him a printout of the list produced by the CPU 13. Alternatively, the monitoring system 11 may further comprise a hand held unit 19, incorporating a bar code reader 19a, which the operator uses. The hand held unit 19 communicates with CPU 13 by means of radio frequency transmissions in order to enable the operator to move around the storage system freely. Each storage means 10 has located on it or nearby an identifier, for example a code and when the operator reaches the relevant bin 10 as indicated by the activated indicator means 17, he uses the bar code reader 19a to read the bar code. The hand held unit 19 then sends a signal to the CPU 13 requesting details of the number of items required from that storage bin 10. The CPU 13 responds by generating a signal indicating the required number of items. These are displayed on the hand held unit 19 in order that the operator is informed of the appropriate number. In all other respects, the monitoring system 11 incorporating the hand held unit 19 operates as previously described.

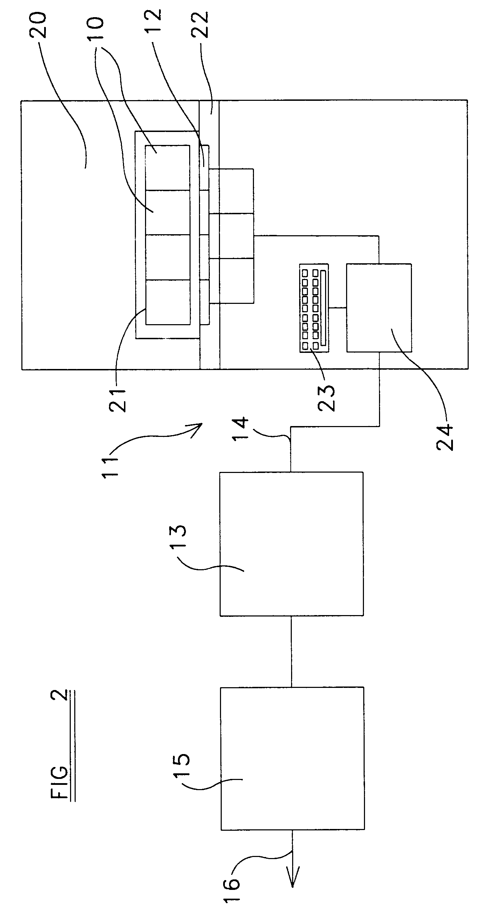

Referring now to Figure 2, a storage system comprises a carousel unit 20 in which are located a plurality of storage means in the form of bins 10. Access to the bins 10 is only permitted at an access point 21 to which bins are rotated within the carousel unit 20, in response to a command entered by an operator on key pad 23 associated with the internal CPU 24 of the carousel unit 20. A work surface 22 is provided adjacent the access point 21 onto which an operator may pull a desired bin 10 present at the access point 21.

A monitoring system 11, suitable for use with the carousel unit 20, comprises sensing means in the form of load balances 12 built into the work surface 22. In this example, a plurality of load balances 12 are provided, each adjacent a bin position at the access point 21. However, a single load balance 12 may be provided in the work surface 22. The load balances 12 are each connected with the CPU 24 of the carousel unit 20 which in turn connects via lines 14 with the CPU 13 to monitor the contents of a bin 10 as previously described.

Preferably, shutters or the like are provided at the access point 21 to prevent access to all but the required bin 10 rotated to the access point 21. These shutters may be controlled by the CPU 24 in co-ordination with the operation of the carousel unit 20, in response to the keying in of a part number or position on the key pad 23 by an operator. If access is only possible to a single bin it ensures that the correct parts are removed by the operator and increases the security of the monitoring system 11.

The monitoring system 11 of Figure 2 operates as follows. When an operator inputs a part number or bin position within the unit 20, the carousel unit 20 rotates to permit access to the appropriate bin 10 through the access point 21. The operator then pulls the appropriate bin 10 onto the balance 12 in the work surface 22. The CPU 24 of the carousel unit 20, or the CPU 13 of the monitoring system 11, already knows which item has been picked, and has programmed within it the weight of the respective bin 10 and the piece part weight of the stock items therein. Therefore the CPU 24 or CPU 13 can calculate the number of stock items removed from the bin 10 and communicates this via line 14 to the CPU 13. The respective bin 10 is then replaced within the carousel unit 20 ready for selection of another part number.

If required, a number of carousel units 20 may be connected via lines 14 to the same CPU 13.

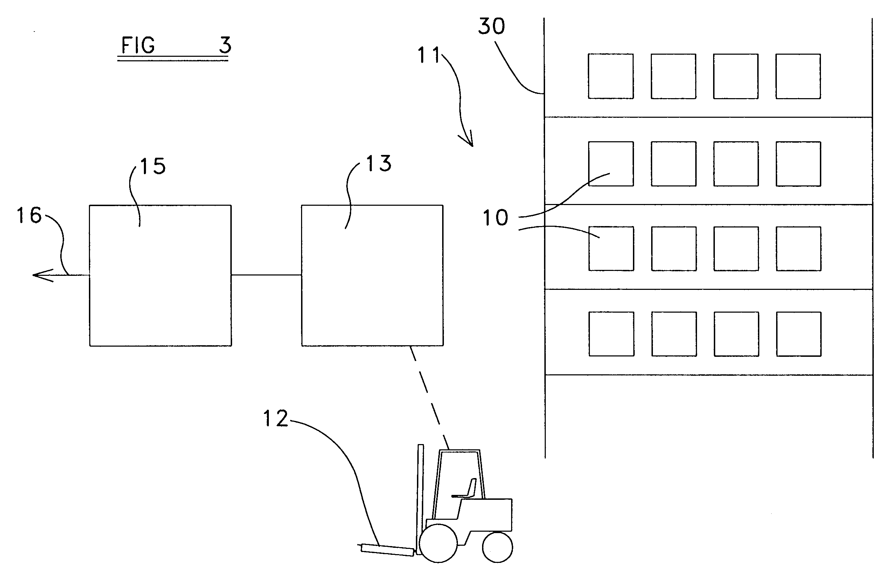

Referring now to Figure 3, a storage system comprises a plurality of storage means in the form of bins 10, located in a racking unit 30. When it is desired to remove stock items from a particular bin 10 a vehicle 31, such as a fork lift truck, removes the required bin from the racking 30 and lowers it to enable access to it for removal of the required parts. The machine 31 may be operator controlled or remotely controlled by a computer as is common in large distribution depots.

A monitoring system 11, suitable for use with a storage system of this kind, comprises sensing means in the form of a load balance 12 built into the load bearing portion of the vehicle 31. The monitoring system 11 further comprises, built into the vehicle 31, a transmitter, connected to the load balance 12 and arranged to transmit the information provided by the load balance 12 to the CPU 13 via radio frequency transmissions 32. If the vehicle 31 is remotely controlled by a computer, it may contain a CPU which interfaces between the load balance 12 and the CPU 13, to provide information concerning the part number etc.

Operation of the monitoring system 11 is essentially the same as previously described, in that the CPU 13 or a CPU in the vehicle 31 knows the weight of the bin 10 and the piece part weight for the contents of the bin. It is therefore possible, in response to the information provided by the load balance 12 to determine the number of parts remaining in the bin 10 and therefore the number removed by the operator.

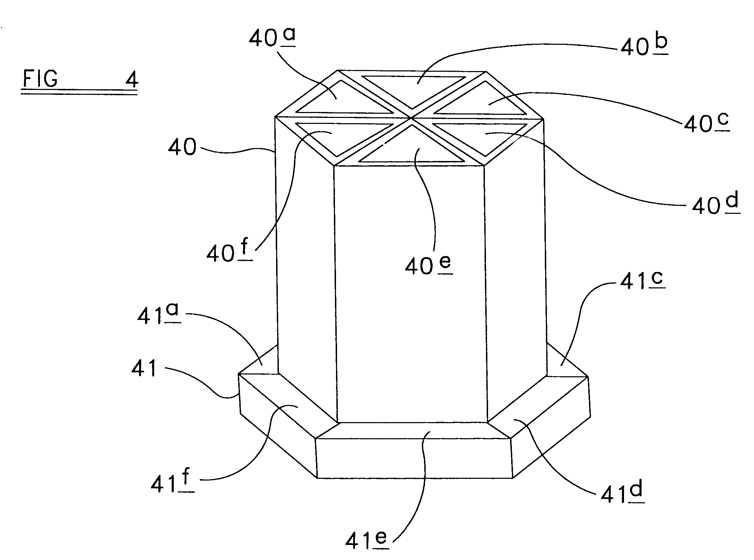

Referring now to Figure 4, a segmented bin 40, suitable for use in storage systems requiring "first-in-first-out" turnover of stock items is illustrated. The bin 40 and associated balance 41 may be used in place of a bin 10 and balance 12 in any of the previously described embodiments of the invention. The bin 40 is substantially octagonal in cross section and comprises six segments 40a-40f each containing the same part number but having been manufactured on different dates. The information concerning the date of manufacture of the parts in each segment 40a-40f is entered into the CPU 13 and, when a bin 40 is selected subsequently, the appropriate segment 40a-40f is automatically selected in order to ensure that the parts are removed appropriately. The bin 40 is shown supported on a load balance 41, also having six segments 41a-41f, aligned with the segments 40a-40f of the bin 40.

Preferably the control provided via the CPU 13 in any of the above described embodiments of a monitoring system according to the invention, includes monitoring of the varying rate of use of the stock in each bin. Thus, the minimum, re-order and maximum stock levels programmed into the CPU may be dynamic, and thus allow for surges in demand such as may occur from season to season. That is, during a period of high useage of a particular stock item the minimum, re-order and maximum stock levels may be adjusted upwards to ensure that sufficient stocks are always to hand and to decrease the possiblity of the stock level reaching zero. Likewise, if the rate of useage of a particular stock item falls, minimum, re-order and maximum stock levels may be reduced to prevent unnecessary holding of stock.

Although in the embodiment described signals from the balances 12 pass directly to the CPU 13, embodiments of monitoring systems according to the invention may comprise intermediate processing units which receive the signals from the balances 12 and, after a delay or some initial processing pass them to the CPU 13. Such embodiments of the monitoring system are particularly appropriate for use with storage systems containing a large number of bins 10, for example two thousand or more. The intermediate processing units may each be associated with a sub-set of balances 12 and arranged accurate signals from each of the balances in the sub-set and to pass the signals to the CPU in one string.

The signal generated by the CPU 13 to instigate the order of replenishment articles for the respective bin 10 may pass to a printer in place of a modem, and automatically generate a printed order document for sending to the appropriate supplier.

Although the embodiment described above is described in relation to storage bins containing distinct articles, monitoring systems according to the invention can be designed as appropriate for use with other forms of storage system. For example, the storage means may comprise tanks containing fluids, or hoppers containing powdered or granular materials. In such examples, the sensing means may be load balances as described above, but may alternatively take any other appropriate form.

A single monitoring system 11 has been described above. However, preferably a plurality of such monitoring systems 11 are installed, one at a supplers premises and the remaining systems at customers premises. In such circumstances, the supply of items from the supplier to customers can be managed efficiently, as can the useage and monitoring of stock at each customer. Further, the supplier can also monitor their stock useage and manufacture further stock or order further stock from their suppliers in turn as required.

The features disclosed in the foregoing description the following claims or the accompanying drawings, expressed in their specific forms or in terms of a means for performing the disclosed function, or a method or process for attaining the disclosed result, or a class or group of substances or compositions, as appropriate, may, separately, or in any combination of such features, be utilised for realising the invention in diverse forms thereof.

## Claims

1. A monitoring system (11), for a storage system comprising a plurality of storage means (10) containing stock, the monitoring system (11) comprising sensing means (12) associated with the storage means (10) to monitor the contents of the storage means (10) and periodically to generate a signal indicative of the contents of the storage means (10), processing means (13) adapted to receive the signals indicative of the contents of the storage means (10) and to compare the measured contents of each storage means (10) with a respective predetermined level of contents and, if the measured contents has fallen below the predetermined level of contents, to generate a signal to instigate an order to replenish the stock in the respective storage means, characterised in that the processing means is adapted to monitor the rate of useage of stock items and to adjust the predetermined level of contents accordingly.

2. A monitoring system (11) according to claim 1 characterised in that the storage means comprise bins (10) containing stock in the form of distinct articles, and the processing means (13) have stored therein the weight of each bin (10) and the weight of each distinct article within each bin, and the sensing means comprises at least one load balance.

3. A monitoring system (11) according to claim 2 characterised in that the sensing means (12) comprises the at least one load balance provided on a load bearing portion of a vehicle adapted for removal of storage means (10) from a storage location.

4. A monitoring system (11) according to claim 3 characterised in that the sensing means (12) comprises the at least one load balance provided adjacent an access point to the storage system (20) through which the storage means (10) may be removed from the storage system (20) for access to the stock contained therein.

5. A monitoring system according to any preceding claim characterised in that at least one of the storage means is multi-segmented and the associated sensing means are multi-segmented to sense the contents of each segment separately.

6. A monitoring system (11) according to any preceding claim characterised in that it further comprises communication means (15) which in response to the signal to instigate an order communicates that order to a supplier.

7. A monitoring system (11) according to any preceding claim characterised in that the processing means (13) is adapted in response to the input of a list of items required to calculate the most efficient order in which to obtain the items from the storage means (10).

8. A monitoring system (11) according to claim 7, characterised in that it further comprises indicator means (17) adapted to activate in response to signals generated by the processing means (13) to indicate to an operator the location of the next storage means (10) to remove items from stock and when the required number of items has been removed from the associated storage means (10).

9. A monitoring system (11) according to claim 8, characterised in that it further comprises a hand held unit (19) carried by the operator, comprising means to input to the hand held unit the identity of a storage means (10), the hand held unit (19) being adapted to communicate with the processing means (13) to obtain details of the number of items to be removed from the storage means (10).

10. A monitoring system, for a storage system comprising a plurality of storage means containing stock, the monitoring system comprising sensing means associated with the storage means when access to the storage means for the removal of stock contained therein is possible, to monitor the contents of the storage means and to generate signals indicative of the contents of the storage means, processing means adapted to receive the signals indicative of the contents of the storage means and to compare the measured contents of each storage means with a respective predetermined level of contents and, if the measured contents has fallen below the predetermined level of contents, to generate a signal to instigate an order to replenish the stock in the respective storage means. characterised in that the processing means is adapted to monitor the rate of useage of stock items and to adjust the predetermined level of contents accordingly.

11. A method of monitoring a storage system comprising a plurality of storage bins containing stock, the method comprising the steps of:
(a) at all times when access to a storage means to remove stock is possible, continuously monitoring the contents of the storage means;
(b) generating signals indicative of the contents of the storage means;
(c) comparing the contents of the storage means with a predetermined level of contents; and,
(d) if the contents of the storage means is below the respective predetermined level of contents, generating an order for stock to replenish the respective storage means,
characterised in that it further comprises the step of monitoring the rate of useage of stock items and adjusting the predetermined level of contents accordingly.
